# EUROPEAN PATENT SPECIFICATION

(11) **EP 3 049 630 B1**
(45) Date of publication and mention of the grant of the patent: **24.04.2019**
(21) Application number: 14848090.8
(22) Date of filing: 22.09.2014
(51) Int. Cl.: F01D 5/14, F01D 5/28

(54) **FAN BLADE ASSEMBLY**
GEBLÄSESCHAUFELANORDNUNG
ENSEMBLE DE PALE DE SOUFFLANTE

(30) Priority: 27.09.2013 US 201361883763 P
(43) Date of publication of application: 03.08.2016
(73) Proprietor: United Technologies Corporation, Farmington, CT 06032 (US)
(72) Inventor: PARKOS, Joseph Jr., East Haddam, CT 06423 (US); HANSEN, James O., Glastonbury, CT 06033 (US); JAWOROWSKI, Mark R., Glastonbury, CT 06033 (US)
(74) Representative: Dehns
(86) International application number: PCT/US2014/056785
(87) International publication number: WO 2015/047949

(56) References cited:
- US-A1- 2010 136 254
- US-A1- 2010 226 783
- US-A1- 2011 116 906
- US-A1- 2011 194 941
- US-A1- 2011 211 967
- US-A1- 2012 301 292

## Description

### TECHNICAL FIELD OF THE DISCLOSURE

The present disclosure is generally related to rotating assemblies for turbomachinery and, more specifically, to a fan blade assembly.

### BACKGROUND OF THE DISCLOSURE

In a turbofan engine, lighter components generally lead to more efficient performance. If less energy is expended to move internal engine parts, more energy is available for useful work. At the same time, the components themselves must be strong enough to withstand operational forces, and types of failure typical for the operating environment of the engine. Safety considerations and regulations based on the frequency and/or severity of possible failure will often dictate that the engine components also be able to withstand other atypical, yet foreseeable events. Because stronger and lighter components are often more expensive, a balance must be struck between efficiency, safety, and cost.

Few locations in an aircraft are more representative of efforts to optimize the balance between efficiency, safety, and cost than the engine. While lighter materials are preferable to improve efficiency, the high risk of severe consequences from engine damage will require that the engine be made of components having additional margins of safety. Combining parts having both high strength and low density greatly restricts material choices and increases costs. Not infrequently, processing these strong and light materials such as titanium or composites is also complex and expensive.

Being designed to pull vast quantities of air through the bypass section to generate thrust, blades in the fan section of the engine are the first line of defense for the engine and are highly susceptible to both small and large scale damage from objects pulled in with the surrounding air, including bird impact damage.

Small scale blade damage causes performance deterioration and increases the number of potential crack initiation sites, while large scale damage includes blade deformation and failure. Small impacts can also lead to large scale damage by serving as crack initiation sites. Larger impacts, such as ingestion of birds can cause one or more blades to deform or break in a single event. Regulations are in place to limit the frequency and severity of single event failures because of the increased risk of emergency landings and catastrophic failure.

Blades made entirely from high-strength materials, such as titanium alloys to name just one non-limiting example, have been proven to offer sufficient hardness to resist erosion and foreign object damage. But titanium alloys are often expensive to purchase and manipulate into a finished blade. And while titanium has a relatively low density compared to a number of metals, the weight of titanium fan blades are significant contributors to overall engine weight. Fiber composites offer significant weight savings relative to titanium and its alloys, but are far more expensive and do not offer the same resiliency.

One technique of reducing the weight of a blade is to use a lower-density metallic material for the airfoil body. As described earlier, composite blades are extremely light, but are far more complex and expensive to produce relative to titanium blades. Small composite blades do not generally achieve sufficient weight savings to merit the additional complexity and cost.

Forming the blade from a lightweight metallic material can reduce cost and weight over a titanium blade. But without additional support or reinforcement, airfoils made solely from most lightweight metals or alloys do not offer sufficient strength and longevity for long-term use.

For example, even the strongest commercially available bulk aluminum alloys do not alone possess the ductility and resiliency necessary to meet current regulatory and design standards or acceptable maintenance intervals. Blades made solely of 2XXX-, 6XXX- or 7XXX-series aluminum alloys, for example, are lighter in weight and less costly to produce than titanium blades. However, without additional fortification against foreign objects, such unprotected aluminum blades are susceptible to rapid deterioration and shorter lifecycles under normal operating conditions from damage caused by small and large scale impacts as described above.

Small-scale deterioration typically consists of pitting, nicks, dings, and erosion from sand, rain, and small runway debris. As atmospheric air is drawn into the engine by the fan section, air is forced chordwise over a leading edge of the blades. The air frequently brings debris in that bombard the blades and compromise their aerodynamic shape, causing blades to depart significantly from their design. When blades lose their shape, efficiency decreases and fuel consumption increases.

This deterioration occurs relatively quickly in unprotected aluminum blades regardless of their overall strength. Though it would be expected that high-strength aluminum alloys, such as those produced via powder metallurgy and containing scandium, nickel, or certain rare earth metals could withstand this bombardment, they are still subject to rapid deterioration and erosion. Additionally, unprotected aluminum blades also experience more frequent unplanned failures from larger foreign object strikes, requiring immediate expensive repairs, downtime for the engine, and potentially catastrophic failure. In an example case of aluminum alloy fan blades having no additional protection, pitting and erosion can occur quickly. This can be on the order of weeks or days, or even over a single flight depending on the severity of flight conditions, thus necessitating shorter maintenance and replacement time horizons for unprotected lightweight blades.

Reinforcing and protecting leading portions of a lightweight blade, such as a blade made from an aluminum alloy, can reduce the weight of the blade while meeting or exceeding current design and safety requirements. It has been found that adding a protective sheath over the forward airfoil edge of a lightweight airfoil can prevent a significant amount of such damage and slow degradation of the blade. Combining a lightweight airfoil, such as one formed from an aluminum alloy, to name just one non-limiting example, with a high-strength metal sheath, like one formed from a titanium, titanium alloys, a nickel alloys, or steel, to name just three non-limiting examples, gives the blade substantially all of the strength and protection of a blade made solely from a titanium alloy. A lightweight low-cost metallic material in the airfoil offers significant cost and weight savings by restricting the use of the more expensive and higher-strength material to the sheath. The sheath directs the strength and resiliency of the stronger material to the most vulnerable locations of the blade, including the leading edge and those portions of the pressure and suction surfaces proximate the leading edge.

However, multi-material assembled fan blades, consisting of, but not limited to, a sheath and a blade body made of dissimilar conductive materials, such as metals, create a galvanic potential. Currently, a non-conductive adhesive is used to bond the sheath to the blade. The non-conductive adhesive therefore provides an insulative layer that prevents the flow of electrons in the potential galvanic current. This adhesive can have gaps in coverage allowing electrons to flow between the two dissimilar materials, which can potentially lead to accelerated corrosion.

Various designs for providing a sheath for use on a fan blade have been proposed, but improvements are still needed in the art.

US 2011/0211967 discloses a fan blade assembly comprising an airfoil with a protective sheath bonded thereto. To prevent galvanic corrosion, a scrim sheet is placed between the airfoil and the sheath to provide dielectric separation.

US 2010/0226783 discloses a protective coating for an airfoil to prevent erosion and corrosion of the airfoil. The protective coating comprises a sacrificial coating and an erosion resistant coating layered on the airfoil surface, and the sacrificial coating is made more anodic than the airfoil surface so that it is preferentially corroded instead of the airfoil surface.

### SUMMARY OF THE DISCLOSURE

In a first aspect, the invention provides a fan blade assembly, comprising: a conductive airfoil including a sheath receiving surface; and a conductive sheath including an airfoil contact surface; wherein at least one of the sheath receiving surface and the airfoil contact surface include a nonconductive material layer; wherein the nonconductive material layer is a nonconductive anodized layer or a nonconductive ceramic layer; and wherein the airfoil contact surface of the conductive sheath is bonded to the sheath receiving surface of the conductive airfoil.

Other embodiments are also disclosed.

### BRIEF DESCRIPTION OF THE DRAWINGS

The embodiments and other features, advantages and disclosures contained herein, and the manner of attaining them, will become apparent and the present disclosure will be better understood by reference to the following description of various exemplary embodiments of the present disclosure taken in conjunction with the accompanying drawings, wherein:
FIG. 1 is a schematic cross-sectional view of a gas turbine engine.
FIG. 2 is a schematic perspective view of a fan blade assembly in an embodiment.
FIG. 3A is a schematic cross-sectional view of the fan blade assembly of FIG. 2 in an embodiment.
FIG. 3B is a schematic cross-sectional view of the fan blade assembly of FIG. 2 in an embodiment.

### DETAILED DESCRIPTION OF THE DISCLOSED EMBODIMENTS

For the purposes of promoting an understanding of the principles of the invention, reference will now be made to certain embodiments and specific language will be used to describe the same. It will nevertheless be understood that no limitation of the scope of the invention is thereby intended, and alterations and modifications in the illustrated device, and further applications of the principles of the invention as illustrated therein are herein contemplated as would normally occur to one skilled in the art to which the invention relates.

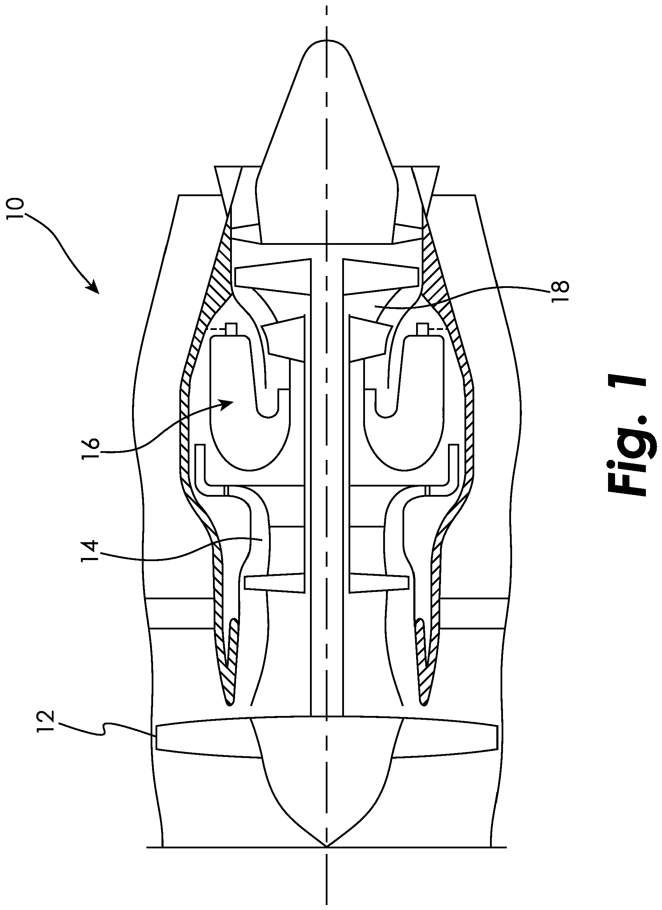

FIG. 1 illustrates a gas turbine engine 10 of a type normally provided for use in a subsonic flight, generally comprising in serial flow communication a fan section 12 through which ambient air is propelled, a compressor section 14 for pressurizing a portion of the air (the gas path air), a combustor 16 in which the compressed air is mixed with fuel and ignited for generating a stream of hot combustion gases, and a turbine section 18 for extracting energy from the combustion gases. Although a gas turbine engine is discussed herein as an illustrative example, the presently disclosed embodiments are applicable to sheathed blades in other applications, such as sheaths for helicopter rotors, to name just one non-limiting example.

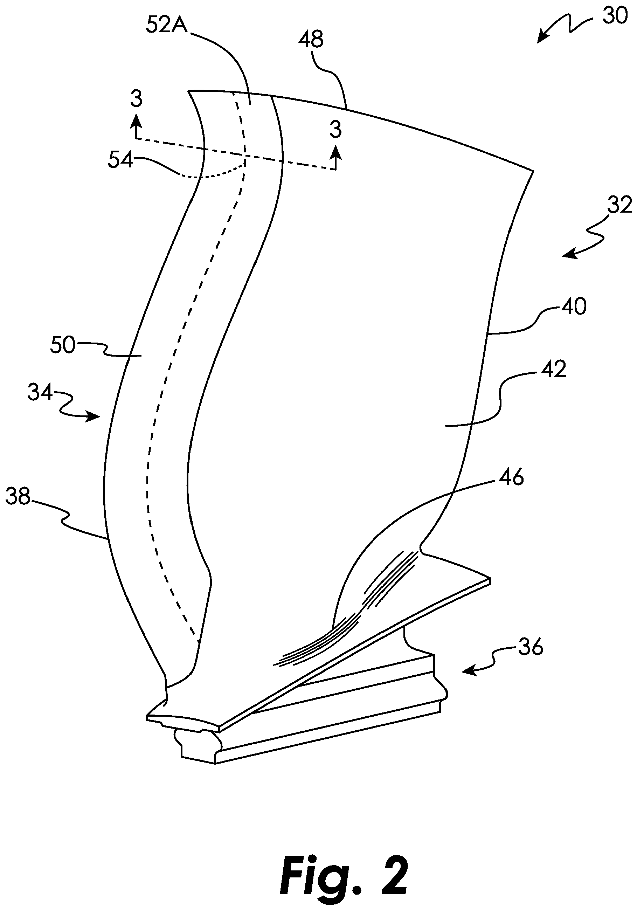

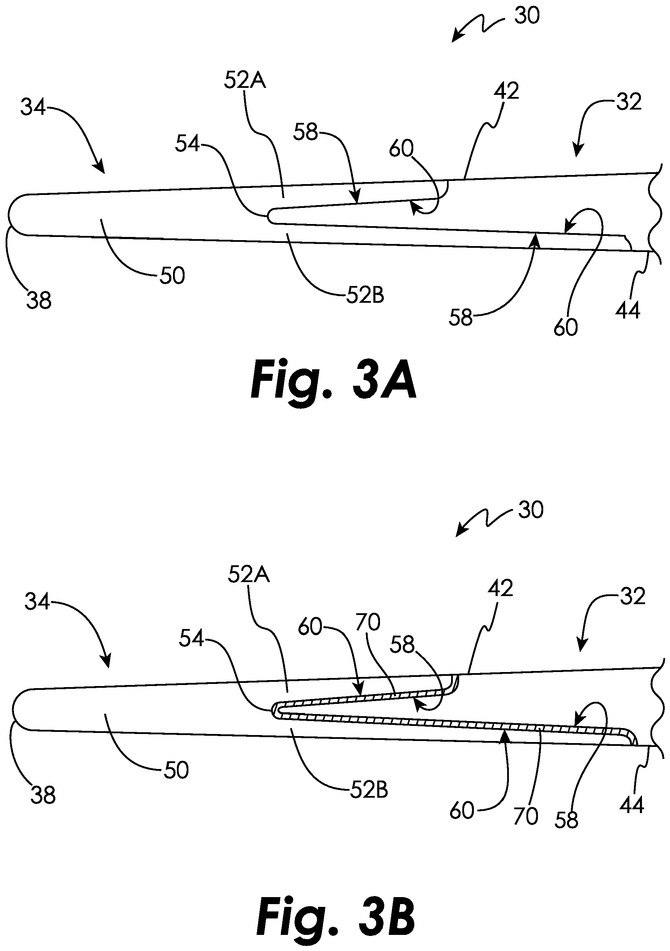

A side view of exemplary fan blade assembly 30 is shown in FIG. 2, which includes cross section 3-3. As seen in FIG. 2, three parts are joined to form fan blade assembly 30: airfoil 32, sheath 34, and root 36. Blade 30 has leading edge 38, trailing edge 40, and suction surface 42. Fan blade assembly 30 also includes platform 46, tip edge 48, sheath head section 50, sheath flank 52A, and forward airfoil edge 54. Pressure surface 44 and sheath flank 52B are at the rear of blade 30 (not visible; shown in FIGs. 3A and 3B).

Leading edge 38 and trailing edge 40 extend generally spanwise in a curved manner from platform 46 to tip edge 48. Air flows chordwise from leading edge 38 over suction surface 42 and pressure surface 44, meeting at trailing edge 40. Root 36 links fan blade assembly 30 at platform 46 to a disk or rotor (not shown) in fan section 12. Here root 36 is shown as a "dovetail" root; however, such an arrangement is not required in the present embodiments. Alternatively, fan blade assembly 30 can have a different configuration of root 36, or root 36 can be incorporated with the disk in what is known in the art as an integral rotor blade configuration.

Sheath 34 covers a portion of airfoil 32 proximal forward airfoil edge 54, extending spanwise over at least a part of the length of leading edge 38 between platform 46 and tip edge 48. Forward airfoil edge 54 is represented by a broken line extending spanwise along sheath 34. It has been found that adding protective sheath 34 over forward airfoil edge 54 of lightweight airfoil 32 can prevent a significant amount of such damage and slow degradation of fan blade assembly 30.

FIG. 3A depicts a partial cross-section of fan blade assembly 30 in an embodiment, taken across line 3-3 of FIG. 2. Fan blade assembly 30 includes airfoil 32, sheath 34, leading edge 38, suction surface 42, pressure surface 44, sheath head section 50, sheath flanks 52A and 52B, airfoil forward edge 54, and sheath receiving surface 58 on the airfoil 32 and a corresponding airfoil contact surface 60 on the sheath 34.

Sheath receiving surface 58 is located on airfoil 32 proximate leading edge 38 and includes a portion of suction surface 42 and pressure surface 44. Flanks 52A and 52B extend back from head section 50 over portions of suction surface 42 and pressure surface 44 proximate leading edge 38. A nonconductive adhesive covers the sheath receiving surface 58/airfoil contact surface 60 to bond the sheath 34 to the airfoil 32.

FIG. 3B depicts a partial cross-section of fan blade assembly 30 taken across line 3-3 of FIG. 2. It is at the sheath receiving surface 58/airfoil contact surface 60 that the possibility of a galvanic potential arises. If there is a gap in coverage of the nonconductive adhesive that covers the sheath receiving surface 58/airfoil contact surface 60, then a galvanic potential will be created between the dissimilar materials of the airfoil 32 and sheath 34. Additionally, if a conductive adhesive were used to bond the sheath 34 to the airfoil 32, a galvanic potential will be created between the dissimilar materials of the airfoil 32 and sheath 34. Therefore, as shown in FIG. 3B, at least the sheath receiving surface 58 and/or the airfoil contact surface 60 of airfoil 30 is/are coated in an embodiment with a nonconductive material 70 prior to bonding the sheath 34 to the airfoil 32. For example, at least the sheath receiving surface 58 and/or the airfoil contact surface 60 of airfoil 30 may be anodized. Anodization may be accomplished in any desired manner, such as by treating the surface to be anodized in a solution of sodium hydroxide or chromic acid, to name just two non-limiting examples. As another example, the sheath receiving surface 58 and/or the airfoil contact surface 60 may be duplex anodized. This duplex anodize may consist of a primary anodize such as the use of phosphoric acid to promote good adhesive bond strength plus a secondary anodize such as the use of sulfuric or tartaric acid to seal the surface and provide electrical insulation, to name just two non-limiting examples. As another example, at least the sheath receiving surface 58 and/or the airfoil contact surface 60 of airfoil 30 may be coated with an electro-deposited ceramic coating, such as Alodine® EC² coating (available from Henkel Corporation, One Henkel Way, Rocky Hill, CT 06067), to name just one non-limiting example. As another example, at least the sheath receiving surface 58 and/or the airfoil contact surface 60 of airfoil 30 may be coated with a cathodic arc or physical vapor deposited ceramic coating.

Adhesive may still be used to bond the sheath 34 to the airfoil 32 during the fan blade assembly 30 assembly process, but the adhesive would not need to be relied on as the sole insulator between the dissimilar conductive materials of the sheath 34 and the airfoil 32. The nonconductive coating would ensure that no electrical current is passed between the dissimilar materials.

While the invention has been illustrated and described in detail in the drawings and foregoing description, the same is to be considered as illustrative and not restrictive in character, it being understood that only certain embodiments have been shown and described and that all changes and modifications that come within the scope of the invention as defined in the appended claims are desired to be protected.

## Claims

1. A fan blade assembly (30), comprising:
a conductive airfoil (32) including a sheath receiving surface (58); and
a conductive sheath (34) including an airfoil contact surface (60);
wherein at least one of the sheath receiving surface and the airfoil contact surface include a nonconductive material layer;
wherein the airfoil contact surface of the conductive sheath is bonded to the sheath receiving surface of the conductive airfoil; **characterised in that** the nonconductive material layer (70) is a nonconductive anodized layer or a nonconductive ceramic layer.

2. The fan blade assembly (30) of claim 1, wherein the conductive sheath (34) is bonded to the conductive airfoil (32) with a nonconductive adhesive.

3. The fan blade assembly (30) of claim 1, wherein the conductive sheath (34) is bonded to the conductive airfoil (32) with a conductive adhesive.

4. The fan blade assembly (30) of claim 1, wherein the conductive airfoil (32) is formed from an aluminum alloy.

5. The fan blade assembly (30) of claim 1, wherein the conductive sheath (34) is formed from a material selected from the group consisting of: titanium, titanium alloys, nickel alloys and steel.

6. The fan blade assembly (30) of claim 1, wherein:
the conductive airfoil (32) further includes an airfoil forward edge (54), a pressure side and a suction side;
the conductive sheath (34) further includes a sheath head section (50) and first and second flanks (52A, 52B) extending from the sheath head section; and
wherein the conductive sheath covers at least a portion of the airfoil forward edge, the first flank covers at least a portion of the suction side, and the second flank covers at least a portion of the pressure side.

7. The fan blade assembly (30) of claim 6, wherein the conductive sheath (34) covers substantially the entire forward airfoil edge (54).

8. The fan blade assembly (30) of claim 1, wherein
the conductive airfoil (32) comprises a first metal;
the conductive sheath (34) comprises a second metal; and
the first metal is different than the second metal.

9. The fan blade assembly (30) of claim 8, wherein the first metal comprises an aluminum alloy.

10. The fan blade assembly (30) of claim 8, wherein the second metal comprises a material selected from the group consisting of: titanium, titanium alloys, nickel alloys, and steel.

11. The fan blade assembly (30) of claim 1, wherein when the nonconductive material layer (70) is a nonconductive ceramic layer the ceramic layer comprises an electro- deposited ceramic coating.

12. The fan blade assembly (30) of claim 1, wherein when the nonconductive material layer (70) is a nonconductive ceramic layer the ceramic layer comprises a ceramic coating deposited by a deposition process selected from the group consisting of: a cathodic arc process and a physical vapor process.

## Patentansprüche

1. Gebläseschaufelanordnung (30), umfassend:
einen leitenden Flügel (32), der eine Hülsenaufnahmefläche (58) beinhaltet; und
eine leitende Hülse (34), die eine Flügelkontaktfläche (60) beinhaltet;
wobei zumindest eine von der Hülsenaufnahmefläche und der Flügelkontaktfläche eine nichtleitende Materialschicht beinhaltet;
wobei die Flügelkontaktfläche der leitenden Hülse mit der Hülsenaufnahmefläche des leitenden Flügels verbunden ist;
**dadurch gekennzeichnet, dass** die nichtleitende Materialschicht (70) eine nichtleitende anodisierte Schicht oder eine nichtleitende Keramikschicht ist.

2. Gebläseschaufelanordnung (30) nach Anspruch 1, wobei die leitende Hülse (34) mit einem nichtleitenden Klebstoff mit dem leitenden Flügel (32) verbunden ist.

3. Gebläseschaufelanordnung (30) nach Anspruch 1, wobei die leitende Hülse (34) mit einem leitenden Klebstoff mit dem leitenden Flügel (32) verbunden ist.

4. Gebläseschaufelanordnung (30) nach Anspruch 1, wobei der leitende Flügel (32) aus einer Aluminiumlegierung gebildet ist.

5. Gebläseschaufelanordnung (30) nach Anspruch 1, wobei die leitende Hülse (34) aus einem Material gebildet ist, das aus der Gruppe ausgewählt ist, die aus Folgendem besteht: Titan, Titanlegierungen, Nickellegierungen und Stahl.

6. Gebläseschaufelanordnung (30) nach Anspruch 1, wobei:
der leitende Flügel (32) ferner eine Flügelvorderkante (54), eine Druckseite und eine Saugseite beinhaltet;
die leitende Hülse (34) ferner einen Hülsenkopfabschnitt (50) und eine erste und zweite Flanke (52A, 52B), die sich von dem Hülsenkopfabschnitt erstrecken, beinhaltet; und
wobei die leitende Hülse zumindest einen Teil der Flügelvorderkante bedeckt, die erste Flanke zumindest einen Teil der Saugseite bedeckt und die zweite Flanke zumindest einen Teil der Druckseite bedeckt.

7. Gebläseschaufelanordnung (30) nach Anspruch 6, wobei die leitende Hülse (34) im Wesentlichen die gesamte Flügelvorderkante (54) bedeckt.

8. Gebläseschaufelanordnung (30) nach Anspruch 1, wobei der leitende Flügel (32) ein erstes Metall umfasst;
die leitende Hülse (34) ein zweites Metall umfasst; und
sich das erste Metall von dem zweiten Metall unterscheidet.

9. Gebläseschaufelanordnung (30) nach Anspruch 8, wobei das erste Metall eine Aluminiumlegierung umfasst.

10. Gebläseschaufelanordnung (30) nach Anspruch 8, wobei das zweite Metall ein Material umfasst, das aus der Gruppe ausgewählt ist, die aus Folgendem besteht: Titan, Titanlegierungen, Nickellegierungen und Stahl.

11. Gebläseschaufelanordnung (30) nach Anspruch 1, wobei, wenn die nichtleitende Materialschicht (70) eine nichtleitende Keramikschicht ist, die Keramikschicht eine elektroabgeschiedene Keramikbeschichtung umfasst.

12. Gebläseschaufelanordnung (30) nach Anspruch 1, wobei, wenn die nichtleitende Materialschicht (70) eine nichtleitende Keramikschicht ist, die Keramikschicht eine Keramikbeschichtung umfasst, die durch einen Abscheidungsprozess abgeschieden ist, der aus der Gruppe ausgewählt ist, die aus Folgendem besteht: einem kathodischen Bogenprozess und einem physikalischen Dampfprozess.

## Revendications

1. Ensemble de pale de soufflante (30), comprenant :
une surface portante conductrice (32) incluant une surface recevant une gaine (58) ; et
une gaine conductrice (34) incluant une surface de contact de surface portante (60) ;
dans lequel au moins l'une de la surface recevant une gaine et de la surface de contact de surface portante inclut une couche de matériau non conducteur ;
dans lequel la surface de contact de surface portante de la gaine conductrice est liée à la surface recevant une gaine de la surface portante conductrice ;
**caractérisé en ce que** la couche de matériau non conducteur (70) est une couche anodisée non conductrice ou une couche céramique non conductrice.

2. Ensemble de pale de soufflante (30) selon la revendication 1, dans lequel la gaine conductrice (34) est liée à la surface portante conductrice (32) à l'aide d'un adhésif non conducteur.

3. Ensemble de pale de soufflante (30) selon la revendication 1, dans lequel la gaine conductrice (34) est liée à la surface portante conductrice (32) à l'aide d'un adhésif conducteur.

4. Ensemble de pale de soufflante (30) selon la revendication 1, dans lequel la surface portante conductrice (32) est constituée d'un alliage d'aluminium.

5. Ensemble de pale de soufflante (30) selon la revendication 1, dans lequel la gaine conductrice (34) est constituée d'un matériau choisi dans le groupe constitué de : titane, alliages de titane, alliages de nickel et acier.

6. Ensemble de pale de soufflante (30) selon la revendication 1, dans lequel :
la surface portante conductrice (32) inclut en outre un bord avant de surface portante (54), un côté de pression et un côté d'aspiration ;
la gaine conductrice (34) inclut en outre une section de tête de gaine (50) et des premier et second flancs (52A, 52B) s'étendant à partir de la section de tête de gaine ; et
dans lequel la gaine conductrice recouvre au moins une partie du bord avant de surface portante, le premier flanc recouvre au moins une partie du côté d'aspiration et le second flanc recouvre au moins une partie du côté de pression.

7. Ensemble de pale de soufflante (30) selon la revendication 6, dans lequel la gaine conductrice (34) recouvre sensiblement l'intégralité du bord avant de surface portante (54).

8. Ensemble de pale de soufflante (30) selon la revendication 1, dans lequel
la surface portante conductrice (32) comprend un premier métal ;
la gaine conductrice (34) comprend un second métal ; et le premier métal est différent du second métal.

9. Ensemble de pale de soufflante (30) selon la revendication 8, dans lequel le premier métal comprend un alliage d'aluminium.

10. Ensemble de pale de soufflante (30) selon la revendication 8, dans lequel le second métal comprend un matériau choisi dans le groupe constitué de : titane, alliages de titane, alliages de nickel et acier.

11. Ensemble de pale de soufflante (30) selon la revendication 1, dans lequel lorsque la couche de matériau non conducteur (70) est une couche céramique non conductrice, la couche céramique comprend un revêtement céramique électrodéposé.

12. Ensemble de pale de soufflante (30) selon la revendication 1, dans lequel lorsque la couche de matériau non conducteur (70) est une couche céramique non conductrice, la couche céramique comprend un revêtement céramique déposé par un processus de dépôt choisi dans le groupe constitué : d'un processus par arc cathodique et d'un processus par vapeur physique.
